Europäisches Patentamt

European Patent Office

Office européen des brevets

(19)

(11) Numéro de publication: **0 163 588**
**A1**

## (12) DEMANDE DE BREVET EUROPEEN

(21) Numéro de dépôt: **85440024.9**

(22) Date de dépôt: **16.04.85**

(51) Int. Cl.⁴: **B 05 B 7/04**

(30) Priorité: **17.04.84 FR 8406169**

(43) Date de publication de la demande:
**04.12.85 Bulletin 85/49**

(84) Etats contractants désignés:
**AT BE CH DE GB IT LI LU NL SE**

(71) Demandeur: **Kiefer, Antoine**
**13, rue de l'Assomption Bernardswiller**
**F-67210 Obernai(FR)**

(72) Inventeur: **Kiefer, Antoine**
**13, rue de l'Assomption Bernardswiller**
**F-67210 Obernai(FR)**

(74) Mandataire: **Aubertin, François**
**Cabinet Lepage & Aubertin Innovations et Prestations 4,**
**rue de Haguenau**
**F-67000 Strasbourg(FR)**

(54) **Pulvérisateur de mélange de composants liquides.**

(57) Un pulvérisateur de mélange de composants liquides destiné notamment à assurer la production de mousse polyuréthane à partir de polyol et isocyanate amenés séparément à une tête de mélange (1) depuis des réservoirs distincts connectés à des dispositifs de mise sous pression des composants du mélange disposés entre lesdits réservoirs et la tête de mélange (1) et constitués notamment par des pompes doseuses à engrenage (5, 6) entraînées par un même moteur (7). Ce pulvérisateur comprend une fête de mélange (1) présentant des moyens de rinçage des conduits (11, 12) d'amentée des composants et d'évacuation du mélange, par l'un des composants dudit mélange.

FIG. 1

EP 0 163 588 A1

Croydon Printing Company Ltd

## Pulvérisateur de mélange de composants liquides.

L'invention concerne un pulvérisateur de mélange de composants liquides destiné notamment à assurer la production de mousse polyuréthane à partir de polyol et isocyanate amenés séparément à une tête de mélange depuis des réservoirs distincts connectés à des dispositifs de mise sous pression des composants du mélange disposés entre lesdits réservoirs et la tête de mélange et constitués notamment par des pompes doseuses à engrenage entraînées par un même moteur.

Actuellement, les pulvérisateurs de mélange à partir de liquides primaires fonctionnent en amenant lesdits liquides à une tête de mélange où la combinaison est réalisée et l'évacuation du produit obtenu par le mélange est assurée par un moyen quelconque, par exemple par un flux d'air généralement obtenu à partir d'une source d'air comprimé.

Il s'ensuit que, dans les installations existantes, il est nécessaire de disposer d'une source d'air comprimé et, par ailleurs, les liquides primaires doivent être amenés vers la tête de mélange sous pression obtenue par gravité ou à l'aide de dispositifs adéquats.

Dans des installations pour usage domestique, par exemple lorsqu'un bricoleur souhaite produire lui-même de la mousse de polyuréthane pour isoler une partie de sa maison, les appareils existants présentent l'inconvénient de nécessiter une source d'air comprimé, ce qui n'est pas fréquent dans les locaux non industriels.

Ainsi, on connaît par le document US-A-4 169 545 correspondant au préambule de la revendication 1 un pulvérisateur nécessitant la présence d'une source d'air comprimé amenée sur le pistolet à l'aide d'un embout (18). Ce pulvérisateur comporte pour chaque composant à mélange une soupape sphérique (124) et (126) actionnée à chaque pression exercée sur une gâchette (12) par tout un ensemble de pièces en mouvement pouvant être sujettes à des incidents de fonctionnement. En outre, la purge du pulvérisateur se fait par air comprimé amené au niveau de l'embout de sortie du pistolet par l'intermédiaire d'un troisième canal (168). Chaque opération de purge nécessite une pression sur une deuxième gâchette (182). Du fait que la purge se fait uniquement par air comprimé et non pas par un solvant inclus dans l'un des deux composants, les diverses pièces 96, 198 et autres s'encrassent peu à peu et il devient nécessaire de démonter toutes ces pièces pour les nettoyer chacune dans un solvant.

La présente invention a pour but de remédier à ces inconvénients. L'invention, telle qu'elle est caractérisée dans les revendications, résout le problème consistant à créer un pulvérisateur de mélange de composants liquides destiné notamment à assurer la production de mousse polyuréthane à partir de polyol et isocyanate amenés séparément à une tête de mélange depuis des réservoirs distincts connectés à des dispositifs de mise sous pression des composants du mélange disposés entre lesdits réservoirs et la tête de mélange et constitués notamment par des pompes doseuses à engrenage entraînées par un même moteur, pulvérisateur dont la tête de mélange présente des moyens de rinçage des conduits d'amenée des composants et d'évacuation du mélange, par l'un des composants dudit mélange.

Les avantages obtenus grâce à cette invention consistent essentiellement en ce que ce pulvérisateur de mélange présente des facilités pour assurer son nettoyage. En effet, selon le mode préférentiel de réalisation du pulvérisateur de la présente invention, celui-ci ne nécessite aucun démontage pour assurer son nettoyage. Il s'agit, par conséquent, d'un appareil très commode d'emploi qui pourra facilement être utilisé par les bricoleurs n'ayant aucune connaissance particulière en mécanique.

Cette faculté de nettoyer l'appareil sans pour autant le démonter sera particulièrement appréciée dans les usages industriels où l'économie de temps ainsi réalisée rentabilisera l'investissement occasionné par l'achat d'un tel matériel.

Un autre avantage du pulvérisateur de mélange de la présente invention réside dans le fait que le rapport de mélange des différents composants est fixé de façon précise. De plus, la certitude d'obtenir un rapport fixe dans la composition du mélange est favorable sur le plan qualitatif vis-à-vis du produit obtenu. Les caractéristiques du produit final sont constantes et aucune perte ne doit être déplorée.

Selon le mode préférentiel de réalisation du pulvérisateur de mélange de la présente invention, seule une source d'énergie électrique est nécessaire. Il s'agit, par conséquent, d'une énergie commune fort répandue dans les habitations domestiques et le pulvérisateur de mélange de la présente invention est, par conséquent, bien adapté à un usage par les bricoleurs pour, dans le cas de production de mousse de polyuréthane, isoler des habitations domestiques.

En outre, les réservoirs contenant les liquides destinés à former le mélange peuvent être situés à un niveau quelconque vis-à-vis de la tête de mélange, ce qui permet, par exemple, au bricoleur de travailler avec le pulvérisateur de mélange au grenier alors que les réservoirs contenant les liquides destinés à former le mélange sont situés au rez-de-chaussée.

L'invention est exposée ci-après plus en détail à l'aide de dessins représentant seulement un mode d'exécution.

La figure 1 représente schématiquement le principe de fonctionnement du pulvérisateur de mélange de la présente invention.

La figure 2 représente en vue de coupe les détails de réalisation de la tête de mélange selon un mode préférentiel de réalisation de cette dernière.

La figure 3 représente à titre d'exemple un pistolet de pulvérisation selon une conception préférentielle de l'invention.

La présente invention vise un pulvérisateur de mélange de composants liquide. Dans l'exemple donné par la suite, il s'agit d'assurer le mélange de deux composants liquides, toutefois un nombre supérieur de liquides initiaux pourra être envisagé sans pour autant sortir du cadre de la présente invention. Par ailleurs, un ou plusieurs composants initial du mélange pourraient se présenter sous forme gazeuse.

La description suivante se fonde sur la production d'une mousse de polyuréthane à partir d'un mélange de polyol et isocyanate. Il s'agit d'un produit couramment répandu dans l'industrie et qui présente des caractéristiques d'isolation très intéressantes qui en étendent les usages. Il est, cependant, évident que d'autres productions pourraient être réalisées.

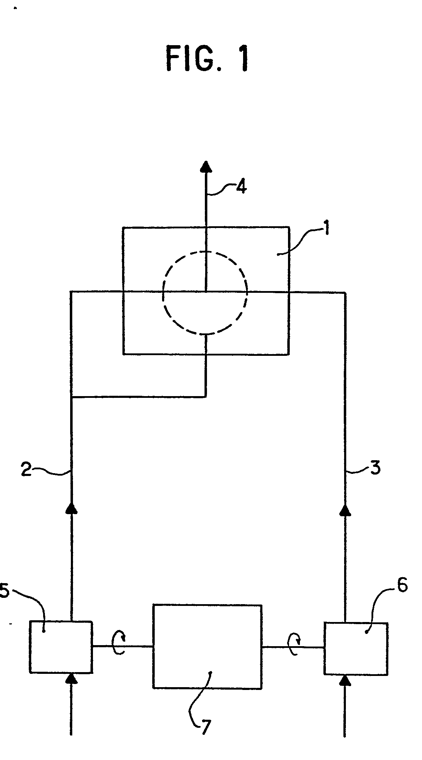

La figure 1 illustre le mode de fonctionnement d'un pulvérisateur de mélange de composants liquides selon la présente invention. Les composants liquides sont initialement stockés dans des réservoirs séparés non illustrés sur la figure 1.

Les liquides initiaux destinés à composer le mélange sont amenés depuis le réservoir vers une tête de mélange 1 par des conduites 2 et 3 séparées.

Les liquides initiaux sont mélangés dans la tête 1 pour former par combinaison chimique le produit résultant, dans le cas présent une mousse de polyuréthane évacuée vers une buse de pulvérisation 4.

Selon la présente invention, les dispositifs 5 et 6 de mise sous pression des composants du mélange sont disposés entre les réservoirs et la tête de mélange 1.

De par ces dispositifs de mise sous pression 5 et 6, il est possible de diriger les composants initiaux du mélange vers la tête 1 quelle que soit la position relative de la tête par rapport au réservoir.

En outre, les caractéristiques des dispositifs de mise sous pression 5 et 6 seront telles qu'il s'agit d'appareils doseurs. Cette propriété permettra de réaliser un mélange avec des proportions fixes et constantes, d'où la production d'un produit final d'excellente qualité.

Ces caractéristiques sont obtenues selon la présente invention en utilisant des pompes doseuses qui se présentent sous la forme de pompes à engrenage 5 et 6. Lesdites pompes à engrenage seront entraînées par un même moteur 7 tel qu'illustré sur la figure 1. En particulier, les pompes 5 et 6 pourront être disposées en bout d'arbre du moteur 7, ce qui garantit une proportionnalité constante dans les composants du mélange.

En outre, selon un mode préférentiel de réalisation du pulvérisateur de mélange de la présente invention, la tête de mélange 1 présente des moyens de rinçage de la conduite d'un des composants du mélange par l'autre composant. Cette caractéristique sera particulièrement appréciée dans le cas de la production de mousse de polyuréthane à partir de polyol et isocyanate car le rinçage du composant d'isocyanate qui est corrosif pourra être rincé par le polyol.

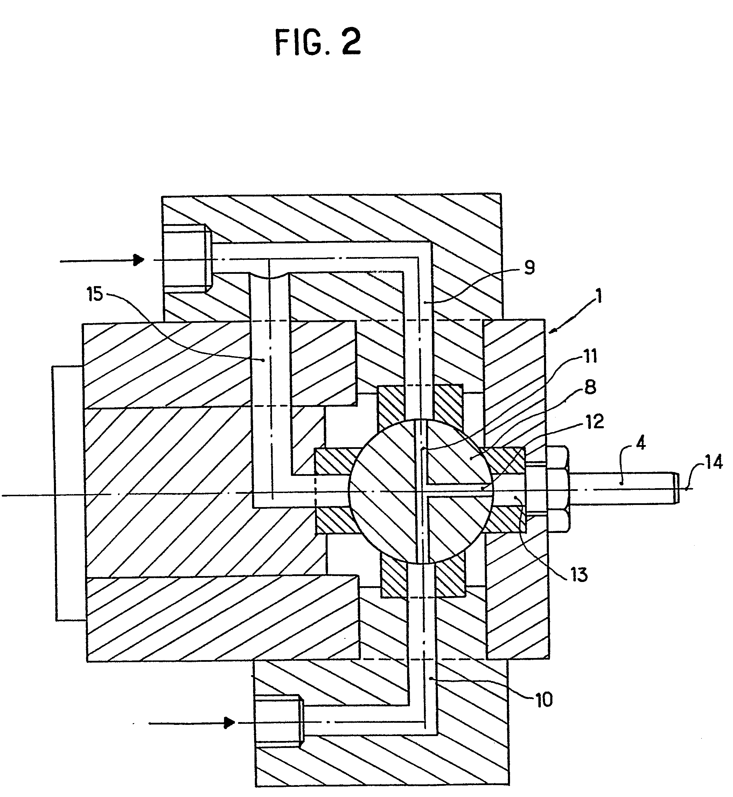

La figure 2 illustre une vue de coupe des détails de construction d'une tête de mélange 1 selon la présente invention.

Les moyens de rinçage de la tête de mélange 1 se présentent sous la forme d'une vanne à boisseau sphérique 8 à quart de tour.

La vanne à boisseau sphérique 8 présente deux conduits d'entrée latéraux 9 et 10 par lesquels sont respectivement introduits les composants liquides du mélange, le polyol et l'isocyanate. Le boisseau sphérique 8 comprend un canal transversal 11 qui débouche respectivement sur les deux conduits d'entrée 9 et 10 par où sont introduits les composants du mélange . Dans le canal 11, le mélange est réalisé et ledit mélange est évacué dans un canal longitudinal 12, ledit canal longitudinal communiquant avec le canal transversal 11. Un conduit d'évacuation 13 est disposé dans le prolongement du canal longitudinal et communique avec la buse de pulvérisation 4.

De la sorte, les composants liquides initiaux introduits par les conduits d'amenée 9 et 10 sont mélangés dans le boisseau sphérique à quart de tour de la vanne 8 et sont évacués après mélange par la buse 4. Puisque les composants initiaux sont introduits sous pression, l'évacuation est réalisée par voie de conséquence.

Le canal longitudinal est disposé orthogonalement vis-à-vis du canal transversal 11.

Pour assurer le rinçage du pulvérisateur de mélange de la présente invention, l'opérateur fait pivoter le boisseau sphérique de la vanne d'un quart de tour. Cette opération a pour conséquence de disposer le canal transversal 11 selon l'axe longitudinal 14 de la tête 1 et le canal longitudinal 12 du boisseau 8 dans le prolongement du conduit d'amenée 9.

En outre, la tête de mélange 1 comprend un conduit de rinçage 15 communiquant avec le conduit d'amenée de polyol 9 et débouchant dans la partie arrière du boisseau sphérique 8. Lorsque ce boisseau sphérique 8 est disposé en position de rinçage, le canal transversal 11 communique, d'une part, avec le conduit d'évacuation 13 et la buse 4 et, par ailleurs, communique avec le conduit de rinçage 15. Par conséquent, le polyol est introduit dans la vanne à boisseau sphérique 8, d'une part, par le conduit d'amenée 9 et, par ailleurs, par le conduit de rinçage 15 et le polyol est évacué par le conduit d'évacuation 13. On peut ainsi noter que, tant le canal transversal 11 que le canal longitudinal 12 sont parcourus par le polyol qui, ainsi, fait office de produit de rinçage du boisseau 8 de la vanne.

Le rinçage de la zone de mélange est ainsi complet et on peut noter qu'il s'agit d'une manoeuvre rapide et extrêmement simple.

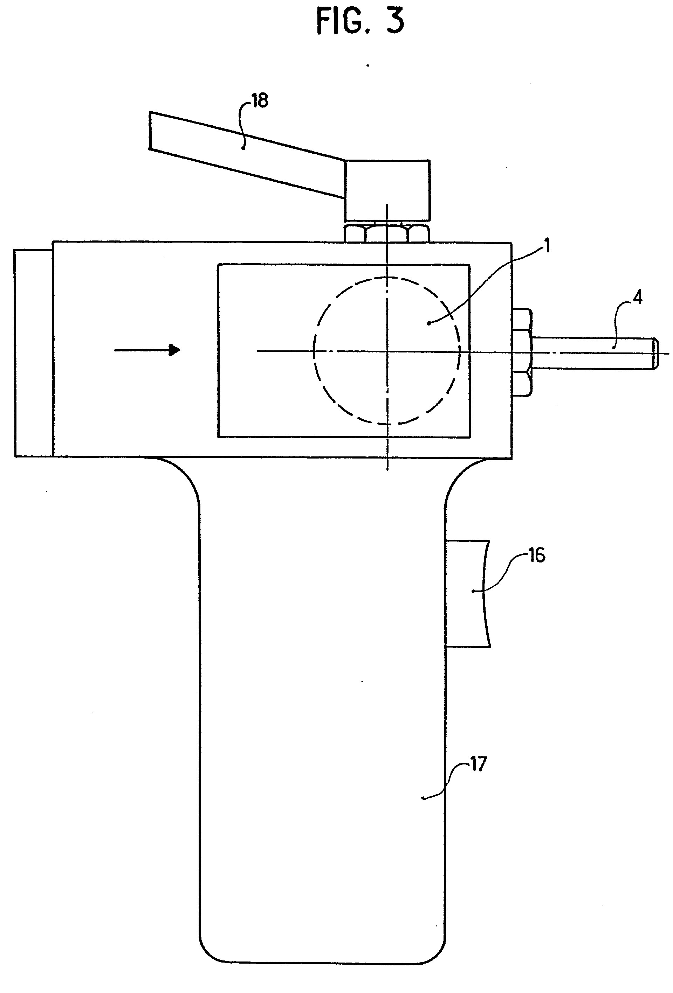

Le mode préférentiel de réalisation du pulvérisateur de mélange en ce qui concerne la tête est illustré à la figure 3. Le pulvérisateur se présente sous la forme d'un pistolet muni d'une gâchette 16 et d'une poignée 7.

La gâchette 16 est garnie d'un contact électrique qui assure le fonctionnement du moteur 7 d'entraînement des pompes d'engrenage 5 et 6. Ainsi, l'opérateur, par simple manoeuvre de la gâchette 16, assure l'amenée des constituants du mélange, c'est-à-dire dans le cas présent, de polyol et d'isocyanate, qui sont mélangés dans la tête 1 et évacués par la buse 4. Le pistolet est un organe maniable qui pourra être manoeuvré dans des endroits peu accessibles pour les garnir de mousse de polyuréthane.

En outre, le pistolet présente un levier de commande 18 disposé à la partie supérieure du pistolet tel qu'illustré à la figure 3, ledit levier assurant la manoeuvre directe du boisseau sphérique 8 de la vanne. Par conséquent, pour assurer le rinçage du boisseau sphérique 8 de la vanne, l'opérateur n'a simplement qu'à effectuer un quart de tour du levier 18 et manoeuvrer la gâchette 16 pour rincer le pistolet. Il s'agit, par conséquent, d'un appareil dont le maniement est extrêmement simple et pourra largement être utilisé par des bricoleurs ne disposant d'aucune connaissance particulière en matière de chimie ou de mécanique.

Par ailleurs, il faut noter que seule une source d'électricité est nécessaire pour assurer le fonctionnement du moteur d'entraînement des pompes à engrenage et, par conséquent, aucune source d'air comprimé n'est nécessaire comme cela était traditionnellement d'usage.

## Revendications

1. Pulvérisateur de mélange de composants liquides destiné notamment à assurer la production de mousse polyuréthane à partir de polyol et isocyanate amenés séparément à une tête de mélange (1) depuis des réservoirs distincts connectés à des dispositifs de mise sous pression des composants du mélange disposés entre lesdits réservoirs et la tête de mélange (1) et constitués notamment par des pompes doseuses à engrenage (5,6) entraînées par un même moteur (7), pulvérisateur caractérisé par le fait que la tête de mélange (1) présente des moyens de rinçage des conduits (11, 12) d'amenée des composants et d'évacuation du mélange, par l'un des composants dudit mélange.

2. Pulvérisateur de mélange de composants liquides selon la revendication 1, caractérisé par le fait que lesdits moyens de rinçage de la tête de mélange (1) se présentent sous la forme d'une vanne à boisseau sphérique (8) présentant deux conduits d'amenée (9) et (10) latéraux desdits composants, et d'un conduit d'évacuation (13) par lequel le mélange est dirigé vers une buse de pulvérisation (4).

3. Pulvérisateur de mélange de composants liquides selon la revendication 2, caractérisé par le fait que la tête de mélange (1) comprend un conduit de rinçage (15), communiquant avec le conduit (9) d'amenée du liquide de rinçage et communiquant également avec le canal transversal (11) réalisé dans le boisseau sphérique (8) de la vanne lorsque celle-ci est en position de rinçage.

4. Pulvérisateur de mélange de composants liquides selon la revendication 2, caractérisé par le fait que le boisseau sphérique (8) à quart de tour présente un canal transversal (11) disposé diamétralement dans le boisseau sphérique (8), et un canal longitudinal (12) disposé orthogonalement au canal transversal (11) et communiquant avec ce dernier.

5. Pulvérisateur de mélange de composants liquides selon la revendication 4, caractérisé par le fait qu'il se présente sous la forme d'un pistolet muni d'une poignée (17) garnie d'une gâchette électrique (16)

**0163588**

de commande du moteur (7) d'entraînement des pompes (5) et (6).

6. Pulvérisateur de mélange de composants liquides selon la revendication 5, caractérisé par le fait que le pistolet présente un levier (18) de commande du boisseau sphérique (8) de la vanne, placée à la partie supérieure du pistolet.

FIG. 1

FIG. **2**

0163588

**0163588**
Numéro de la demande

Office européen
des brevets

**RAPPORT DE RECHERCHE EUROPEENNE**

EP  85 44 0024

## DOCUMENTS CONSIDERES COMME PERTINENTS

| Catégorie | Citation du document avec indication. en cas de besoin des parties pertinentes | Revendication concernee | CLASSEMENT DE LA DEMANDE (Int Cl.4) |
|---|---|---|---|
| Y,D | US-A-4 169 545  (H.W. DECKER)<br>* Colonne 1, lignes 9-27; colonne 3, lignes 1-18; figure 1 * | 1 | B 05 B   7/04 |
| | --- | | |
| Y | FR-A-2 486 826  (MAXIMOV et al.)<br>* Page 2, ligne 19 - page 3, ligne 17; figure 2 * | 1 | |
| | --- | | |
| A | CA-A- 584 712  (F.E. GUSMOR)<br>* Figure 6; colonne 3, lignes 15-32 * | 1,5 | |
| | --- | | |
| A | US-A-1 327 831  (L. LITTLE)<br>* Figures 2,3 * | 2-4 | |
| | ----- | | |

| | |
|---|---|
| | DOMAINES TECHNIQUES RECHERCHES (Int. Cl.4) |
| | B 05 B<br>F 16 K |

Le présent rapport de recherche a été établi pour toutes les revendications

| Lieu de la recherche | Date d'achèvement de la recherche | Examinateur |
|---|---|---|
| LA HAYE | 18-07-1985 | ERNST R.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82